# EUROPEAN PATENT APPLICATION

(11) **EP 4 620 611 A1**
(43) Date of publication of application: **24.09.2025**
(21) Application number: 25156806.9
(22) Date of filing: 10.02.2025
(51) Int. Cl.: B23K 26/352, B23K 26/36

(54) **COMPUTING SYSTEM FOR PREDICTING SUBSTRATE TEMPERATURES DURING LASER OPERATION**

(30) Priority: 07.03.2024 US 202418599012
(71) Applicant: The Boeing Company, Arlington, VA 22202 (US)
(72) Inventor: KOLTENBAH, Benjamin, Arlington, 22202 (US); GREGERSEN, Kimberly-Alice, Arlington, 22202 (US); FRONING, Marc, Arlington, 22202 (US); KEARSCHNER, Madison, Arlington, 22202 (US)
(74) Representative: Boult Wade Tennant LLP

(57) **Abstract**

A computing system inputs parameters of a laser and a substrate to be subjected to operation of the laser to an ablation stage portion of a model to calculate a first segment of laser operation. The calculation outputs an updated geometry of the substrate after a predicted ablation of material from the substrate via at least one laser pulse, and an updated temperature value of the substrate after being subjected to the at least one laser pulse. The system inputs the updated values to a thermodynamic stage portion of the model to calculate a second segment of laser operation which outputs an updated temperature value of the substrate after heat transfer through the substrate and from the substrate to ambient air, and iteratively switches between the ablation and thermodynamic stage portions through a final segment of laser operation to output a final predicted temperature value of the substrate.

## Description

### FIELD

The present disclosure relates generally to laser operation and more particularly to model-based engineering (MBE) tools for supporting development of laser ablation processes of materials.

### BACKGROUND

Laser systems are commonly in use for operations such as laser ablation, in which material is removed from a substrate by laser. In one application, laser ablation is used to remove paint from a surface and/or prepare the surface for repainting. During this process, a layer of paint is removed by the energy of the laser. The laser can also be configured to remove impurities such as oxidation from the surface and/or to impart a desired surface roughness. New paint applied to surfaces treated in this manner has the expectation of better application, adhesion, and lifespan. However, for highly regulated industries such as aerospace, any changes to an already approved process or development of a brand-new process often requires significant investment in qualifying the updated or new process with the appropriate regulatory agencies. This may apply to updated laser technology, new materials, changed operation settings, and more. For example, one laser system for a specific application may take several years and detailed analysis of the laser system operating on hundreds of fatigue coupons to obtain full qualification and approval.

### SUMMARY

To address the above issues, according to one example of the present disclosure, a computing system for predicting substrate temperatures during simulated laser operation is provided herein. In this example, the computing system includes processing circuitry configured to retrieve parameters of a laser and parameters of a substrate to be subjected to operation of the laser, and input the parameters of the laser and the substrate to an ablation stage portion of a model to calculate a first segment of laser operation. As used herein, the "substrate" is the item or material subjected to the laser operation and may include one or more distinct layers and/or one or more coatings, or be formed of a single uniform material. The first calculation outputs an updated geometry of the substrate after a predicted ablation of material from the substrate via at least one laser pulse, and an updated temperature value of the substrate after being subjected to the at least one laser pulse. The processing circuitry is further configured to input the updated geometry and the updated temperature value to a thermodynamic stage portion of the model to calculate a second segment of laser operation which outputs an updated temperature value of the substrate after heat transfer through the substrate and from the substrate to ambient air. The processing circuitry is further configured to iteratively switch between the ablation stage portion and the thermodynamic stage portion through a final segment of laser operation to output a final predicted temperature value of the substrate.

Another example of the present disclosure relates to a method for predicting substrate temperatures during simulated laser operation. In this example, the method includes retrieving parameters of a laser and parameters of a substrate to be subjected to operation of the laser, and inputting the parameters of the laser and the substrate to an ablation stage portion of a model to calculate a first segment of laser operation. The calculation outputs an updated geometry of the substrate after a predicted ablation of material from the substrate via at least one laser pulse, and an updated temperature value of the substrate after being subjected to the at least one laser pulse. The method includes inputting the updated geometry and the updated temperature value to a thermodynamic stage portion of the model to calculate a second segment of laser operation which outputs an updated temperature value of the substrate after heat transfer through the substrate and from the substrate to ambient air. The method includes iteratively switching between the ablation stage portion and the thermodynamic stage portion through a final segment of laser operation to output a final predicted temperature value of the substrate.

Still another example of the present disclosure relates to a computing system for predicting substrate temperatures during simulated laser operation. The computing system includes processing circuitry configured to retrieve respective parameters of a laser and parameters of a plurality of substrates to be separately subjected to operation of the laser, and input the respective parameters of the laser and the substrate to an ablation stage portion of a model to calculate a first segment of laser operation. The calculation outputs a respective updated geometry of each substrate after a predicted ablation of material from the substrate via at least one laser pulse, and a respective updated temperature value of each substrate after being subjected to the at least one laser pulse. The processing circuitry is further configured to input the respective updated geometry and the respective updated temperature value to a thermodynamic stage portion of the model to calculate a second segment of laser operation which outputs a respective updated temperature value of each substrate after heat transfer through the substrate and from the substrate to ambient air. The processing circuitry is further configured to iteratively switch between the ablation stage portion and the thermodynamic stage portion through a final segment of laser operation to output a respective final predicted temperature value of each substrate. The processing circuitry is further configured to identify a respective maximum temperature predicted to be experienced by each substrate during the entire laser operation, compare the respective maximum temperature to the respective parameters of each substrate, and based on the comparison, output a prediction of whether each substrate of the plurality of substrates is to be damaged by the laser operation.

### BRIEF DESCRIPTION OF THE DRAWINGS

FIG. 1 illustrates an example laser operation modeled by a computing system for predicting substrate temperatures during simulated laser operation.
FIG. 2 is a schematic illustration of an example of the computing system used to model the laser operation of FIG. 1.
FIG. 3 is a flowchart of a method for predicting substrate temperatures during simulated laser operation.
FIG. 4 is a schematic view of an example computing environment in which the computing system of FIG. 2 may be enacted.

### DETAILED DESCRIPTION

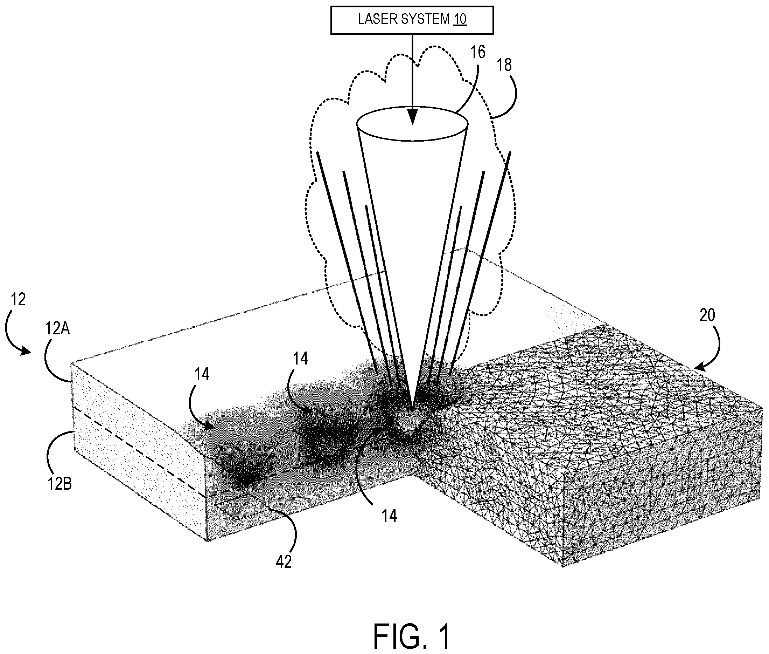

To address the issues discussed above, FIG. 1 illustrates an example laser operation modeled by a computing system for predicting substrate temperatures during simulated laser operation according to one example of the present disclosure. Here, a laser system 10 including one or more lasers is subjecting a substrate 12 to a laser operation. For example, the laser operation could be depainting, removal of another type of layer other than paint, surface preparation, boring, etching, etc. When the purpose of the laser operation is to remove or treat only a top surface, the substrate 12 may include a top layer 12A and a bottom layer 12B, as shown separated by a dashed line in FIG. 1 for illustration. Examples of materials of the top layer 12A may include, but are not limited to, paint, ink, epoxy, ceramic coating, and various plastics.

Before the laser operation, the substrate 12 may be flat or generally flat. As illustrated, the laser system 10 has emitted a laser pulse at three locations during the laser operation. Each laser pulse may leave a crater 14 in a top surface of the substrate 12 as material is ablated from the substrate 12, as shown via straight lines on each side of a laser beam 16. Generally, the laser beam 16 may have any suitable profile such as super-Gaussian (rounded top-hat), as may the temporal profile of the laser beam 16. A cloud 18 of ash and vaporized residue may billow up around the laser beam 16 as it heats the material of the substrate 12 into plasma, which may be collected by a fume extractor and safely filtered. Any suitable type of laser may be modeled, such as an ultraviolet (UV) laser or a near infrared (near-IR) laser.

Notably, as each crater 14 is formed, heat from the laser beam 16 is imparted to the remaining substrate 12, and as the laser system 10 moves along to the next site, residual heat from the earlier craters 14 continues spreading throughout the substrate 12 and dissipating to ambient air. A temperature profile of the craters 14 is illustrated with a color gradient, reproduced in FIG. 1 in grayscale. In addition, as shown in the right half of FIG. 1, a three-dimensional (3D) rendering of the modeled laser operation disclosed herein may include a mesh 20 following the topography of the substrate 12 as it is altered by the laser system 10. Because a flat surface will hold and spread heat differently than a cratered surface, the mesh 20 may be updated throughout the modeled laser operation in three dimensions to increase the accuracy of the final output. Alternatively, the modeling may be simplified to output a two-dimensional (2D) rendering when suitable.

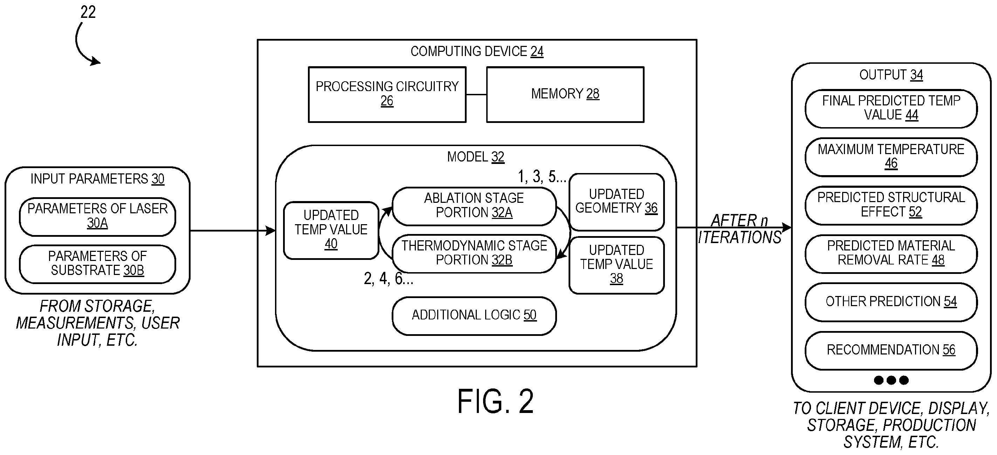

Next, FIG. 2 is a schematic illustration of an example of a computing system 22 used to model the laser operation of FIG. 1. The computing system 22 for predicting substrate temperatures during simulated laser operation includes at least one computing device 24 having processing circuitry 26 configured to execute instructions stored in memory 28 to perform various functions. At a basic level, the computing device 24 receives input parameters 30 from a source such as internal or external storage, user input, measurements, etc., performs calculation using a model 32, and outputs as output 34 any number of values, data, and/or renderings based on predicted laser operation determined by the model 32.

In more detail, the processing circuitry 24 is configured to retrieve parameters 30A of a laser and parameters 30B of a substrate to be subjected to operation of the laser, and input the parameters 30A, 30B of the laser and the substrate to an ablation stage portion 32A of the model 32 to calculate a first segment of laser operation. The ablation stage portion 32A of the model 32 may be simplified as a one-dimensional (1D) equation-based model that couples together a dozen or more physical processes such as photothermal decomposition and photodissociative bond breaking, depending on the materials used. In this case, the substrate 12 depth is discretized in 1D into segments as time also advances in discretized steps. The top layer 12A of the substrate in some examples is simplified as a polymer represented as a system of chemical moieties with two possible electronic states, and the populations of these states are tracked in time as energy is deposited into the substrate 12 from the laser beam 16. There are further laser-induced chemical modifications resulting in a modified polymer, the concentration of which is monitored in each 1D segment to denote onset of ablation, that is, when the material is separated and removed from the rest of the substrate 12. It is noted that in other examples, the ablation stage portion 32A of the model 32 may be expanded to 2D or 3D as needed, and/or may be built to correspond to different physical mechanisms for different materials and scenarios as appropriate.

Through the course of a single pulse of the laser beam 16 and the onset of ablation occurring deeper into the substrate 12, the full ablation depth (crater depth) for that pulse is calculated. By incorporating the parameters 30A such as the spot size and distribution, the 1D results can be expanded to hybridized 2D results for ablation depth and rate, and even 3D. The resulting temperature and ablation depth is highly dependent on the power (irradiance) of the laser system 10, in addition to other settings in the parameters 30A of the laser inputted to the model 32, employing a form of the Beer-Lambert Law. For example, the parameters 30A of the laser may include one or more of target ablation depth, frequency, power setting, efficiency, power delivery, spot diameter, spot area, pulse duration, pulse energy, peak power, spot fluence, irradiance, pulse overlap, line speed, row spacing, spot spacing, and/or dosage. Using a combination of these parameters 30A, 30B, for the first segment of laser operation, the ablation stage portion 32A of the model may be configured to an updated geometry 36 of the substrate 12 (e.g., a mathematical description of the mesh 20 with one crater 14) after a predicted ablation of material from the substrate via at least one laser pulse, and an updated temperature value 38 of the substrate 12 after being subjected to the at least one laser pulse. Accordingly, further calculations can be made based on updated values for both heat and geometry after each ablation stage, increasing the accuracy of the model. As mentioned above, the model may describe the ablation in 2D or 3D, and therefore the updated geometry 36 of the substrate 12 may be 2D or 3D according to design considerations.

In some examples, the at least one laser pulse may be one single laser pulse such that the model 32 calculates the impact of the laser operation one pulse at a time. This may allow the model 32 to accurately calculate changes in temperature in between each pulse. However, multiple laser pulses may be grouped together instead. In some examples, such as for hole boring, multiple laser pulses may be performed at the same position on the substrate 12 rather than moving along the surface as illustrated in FIG. 1. Additionally, for depainting, the substrate 12 may include the top layer 12A of paint and the bottom layer 12B of metal alloy, and the ablated material may include the paint. In this case, paint removal from a variety of components such as aircraft parts can be carefully and thoroughly performed to exact specifications and damage to the metal alloy can be avoided. The top layer 12A to be removed may also be a resin formed on top of a composite bottom layer in other examples, and the parameters 30B of the substrate 12 utilized by the model 32 may be adjusted accordingly. For example, the top layer 12A may be a degraded resin that is removed. It will be appreciated that the explanation of the laser operation herein is made from a top-down perspective where the laser operates downward onto a top surface or the top layer 12A, but most substrates 12 are capable of being flipped over so that a bottom surface or the bottom layer 12B can be subjected to the laser operation additionally or alternatively. Furthermore, the laser system 10 may be oriented in any feasible direction rather than strictly downward. Alternatively, the laser operation may be surface preparation of the substrate 12 prior to painting, in order to provide a clean and suitable surface for a long-lasting, smooth, and consistent paint layer.

Next, the processing circuitry 26 may be configured to input the updated geometry 36 and the updated temperature value 38 to a thermodynamic stage portion 32B of the model 32 to calculate a second segment of laser operation which outputs an updated temperature value 40 of the substrate 12 after heat transfer through the substrate 12 and from the substrate 12 to ambient air. For example, the thermodynamic stage portion 32B may calculate heat transfer including natural convection, conduction, and radiation by use of one or more heat transfer equations, among other calculations. The computing system 22 may be configured to receive user input selecting which calculations should be included as settings. In some cases, the system may include one or more backside temperature sensors 42 (see FIG. 1) configured to sample the temperature on a bottom surface of the substrate 12, and the model 32 may be configured to output a predicted top surface temperature based on measurements from the temperature sensors 42.

The processing circuitry 26 maybe be further configured to input the parameters 30A, 30B of the laser and the substrate to the thermodynamic stage portion 32B of the model 32, so that the thermodynamic effects between pulses of the laser beam 16 can be accurately accounted for. Here, the parameters 30B of the substrate 12 may include one or more of initial geometry, a composition of a material of the substrate, thermodynamic properties of the material, mechanical properties of the material, phase transformation properties of the material, and/or glass transition properties of the material, which may increase the accuracy of the model 32 by accounting for a variety of affects. Preferably, the parameters 30B of the substrate 12 include temperature-dependent properties of the material of the substrate 12, to increase the accuracy of the model calculations in consideration of the wide range of temperatures that will be experienced during and after ablation. Generally, the thermodynamic stage portion 32B of the model 32 utilizes density, thermal conductivity, and specific heat, among other parameters of the substrate 12. In some examples, the thermodynamic stage portion 32B may also perform temperature-induced stress calculations, which utilize the linear expansion coefficient, Poisson's ratio, and Young's modulus of the substrate 12 as well.

Next, the processing circuitry 26 may be configured to iteratively switch between the ablation stage portion 32A and the thermodynamic stage portion 32B through a final (n) segment of laser operation to output a final predicted temperature value 44 of the substrate after n iterations of switching through both portions 32A, 32B. For example, if the number of laser pulses calculated per ablation stage is one, and the thermodynamic stage portion 32B calculates the heat transfer between or after pulses, then for a laser operation of x pulses, n = x, or the number of total segments of laser operation = 2x. By breaking the modeling down to small segments and iteratively switching between the two portions 32A, 32B, the model 32 is a comprehensive model that is able to more accurately calculate the changes occurring at each stage based on the changes just calculated in the prior stage, even though each stage is modeling different mechanisms.

The final predicted temperature value 44 and intermediate values calculated throughout the modeling process may be used in a variety of ways. For example, the processing circuitry 26 may be further configured to output a maximum temperature 46 predicted to be experienced by the substrate 12, which may be the final predicted temperature value 44, or may be a prior stored temperature value before heat loss reduced the temperature to the final predicted temperature value 44. Similarly, the processing circuitry 26 may be further configured to output a predicted material removal rate 48 of material from the substrate 12. The removal rate may be, for example, a rate at which the material is ablated over time, which may be measured as depth of material removed over time. The removal rate 48 may be incorporated into further calculations using additional logic 50 or another computing device 24 to provide recommendations to the user, control an actual laser operation, or scale up or otherwise alter the laser operation with other parameters. Any of the simulation data in the output 34, including intermediate values, may be collected and stored to build a database of parameters that may be used to build a "digital twin" of actual devices and components. Such a digital twin could be used, for example, to avoid parameters that are predicted to cause problems by the model 32 in future design considerations.

The computing system 22 may be configured to generate other items as the output 34 of the model 32 using the additional logic 50. For example, the processing circuitry 26 may be further configured to output a predicted structural effect 52 on the substrate based on a comparison between the maximum temperature 46 and the parameters 30B of the substrate 12. For example, one of the parameters 30B may be indicative of a phase change, other structural change, or failure point of the material of the substrate 12, such as a melt zone. By determining that the maximum temperature 46 has met or exceeded this parameter during the simulation, optionally for a specified amount of time, the processing circuitry 26 may be able to predict that the substrate 12 has experienced the predicted structural effect 52 such as melting, warping, weakening, cracking, fatigue acceleration, etc.

Based on at least the predicted structural effect 52, the processing circuitry 26 may be configured to determine whether either the laser system 10 or the material has passed or failed the simulated test, where a predetermined negative structural effect is a failure. Thus, while a single test has been described above using one laser system 10 and one substrate 12, the processing circuitry 26 may be configured to retrieve respective parameters 30A of the laser and parameters 30B of a plurality of substrates 12 to be separately subjected to operation of the laser, input the respective parameters 30A, 30B to the ablation stage portion 32A to output a respective updated geometry 36 of each substrate 12 and a respective updated temperature value 38 of each substrate 12. Similarly, the processing circuitry 26 may be configured to input the respective updated geometry 36 and the respective updated temperature value 38 to the thermodynamic stage portion 32B to output a respective updated temperature value 40 of each substrate 12, and as before, iteratively switch between the ablation stage portion 32A and the thermodynamic stage portion 32B through the final segment of laser operation to output a respective final predicted temperature value 44 of each substrate 12.

Thusly, the processing circuitry may be configured to identify the respective maximum temperature 46 predicted to be experienced by each substrate 12 during the entire laser operation, compare the respective maximum temperature 46 to the respective parameters 30B of each substrate 12, and based on the comparison, output a prediction 54 of whether each substrate 12 of the plurality of substrates 12 is to be damaged by the laser operation. In this way, a variety of substrates 12 can be tested under simulation with the same laser system 10 and the user can be informed whether any given substrate 12 would be successful or fail when subjected to operation by the given laser system 10. Accordingly, the user can make a more informed decision when developing new systems, components, and materials, and then actual testing can be reserved for validating the output 34 of the model 32, interpolating, or directed testing according to a recommendation 56 of the model 32, etc. Testing a plurality of substrate 12 coupons under circumstances that would typically use 350 coupons for full qualification and approval may with use of the model 32 reduce actual testing to validation with only 15-30 coupons, which presents significant savings in terms of cost, time, labor, and use and wear of laser systems 10. Furthermore, rather than a variety of substrates 12, a plurality of laser systems 10 with respective parameters 30A may be similarly modeled instead, so that a new laser system 10 can be investigated and a corresponding recommendation 56 can be made. In addition, the output 34 may be output to a client device, an associated display device, internal or external storage, directly to a production system for controlling an actual operation, etc. Thus, the output 34 may be used manually by the user at the time of output or at a later date, or the output 34 may be used automatically by the computing system 22 without further user input.

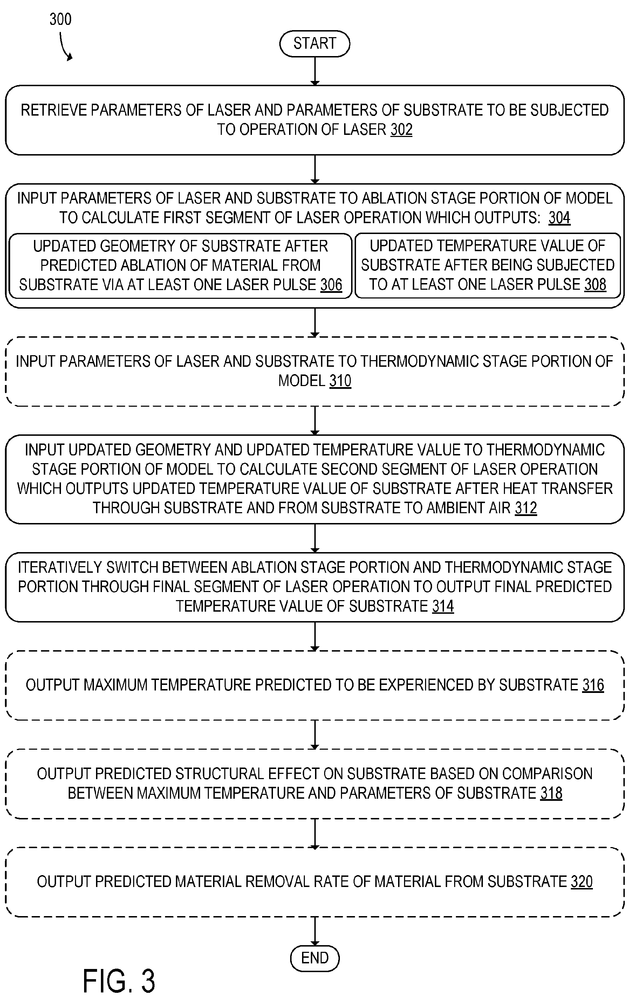

FIG. 3 is a flowchart of a method 300 for predicting substrate temperatures during simulated laser operation. At 302, the method 300 may include retrieving parameters of a laser and parameters of a substrate to be subjected to operation of the laser. At 304, the method 300 may include inputting the parameters of the laser and the substrate to an ablation stage portion of a model to calculate a first segment of laser operation which outputs, at 306, an updated geometry of the substrate after a predicted ablation of material from the substrate via at least one laser pulse, and at 308, an updated temperature value of the substrate after being subjected to the at least one laser pulse. Optionally, at 310, the method 300 may include inputting the parameters of the laser and the substrate to a thermodynamic stage portion of the model. At 312, the method 300 may include inputting the updated geometry and the updated temperature value to a thermodynamic stage portion of the model to calculate a second segment of laser operation which outputs an updated temperature value of the substrate after heat transfer through the substrate and from the substrate to ambient air. Accordingly, based on a variety of parameters, each portion of the model may be able to account for different factors that may affect the domain of the other portion of the model. Thus, at 314, the method 300 may include iteratively switching between the ablation stage portion and the thermodynamic stage portion through a final segment of laser operation to output a final predicted temperature value of the substrate, thereby accounting for the effects of each portion of the model in small increments when proceeding to the other portion.

As mentioned above, the at least one laser pulse may one single laser pulse, so that the ablation stage portion can account for the ablation of a single crater and then the thermodynamic stage portion can account for the heat transfer occurring between ablations. Alternatively, multiple laser pulses may be grouped together. In some cases, the substrate may have a top layer of paint and a bottom layer of metal alloy, and the ablated material may include the paint. In others, the laser operation may be surface preparation of the substrate prior to painting. Additional use cases are also possible. Optionally, at 316, the method 300 may include outputting a maximum temperature predicted to be experienced by the substrate. The maximum temperature can be used in many different ways, such as monitoring physical changes to the substrate and predicting failure of the laser operation. For example, at 318, the method 300 may include outputting a predicted structural effect on the substrate based on a comparison between the maximum temperature and the parameters of the substrate. The predicted structural effect may include, for example, melting, warping, weakening, cracking, or fatigue acceleration. At 320, the method 300 may include outputting a predicted material removal rate of material from the substrate. The removal rate may be a useful metric by which applicability and scalability of the simulated laser operation may be considered for putting to practical use. The method 300 may result in further predictions and outputs, such as recommendation of materials or laser settings, and so on.

In some examples, the methods and processes described herein may be tied to a computing system of one or more computing devices. In particular, such methods and processes may be implemented as a computer-application program or service, an application-programming interface (API), a library, and/or other computer-program product. Examples of such programs may include, but are not limited to, COMSOL and MATLAB.

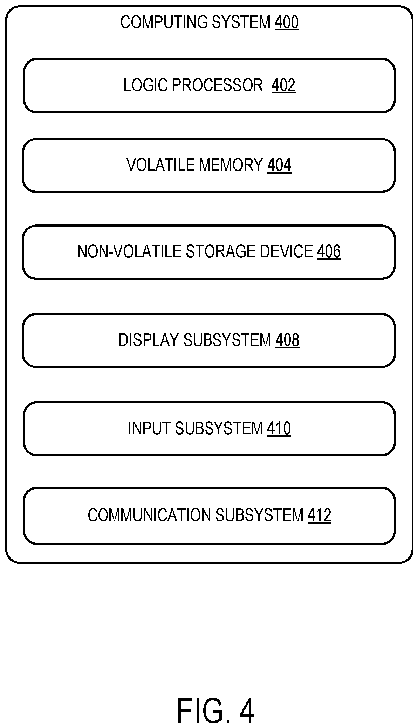

FIG. 4 schematically shows a non-limiting example of a computing system 400 that can enact one or more of the methods and processes described above. Computing system 400 is shown in simplified form. Computing system 400 may embody the computing system 1 described above and illustrated in FIG. 1. Components of computing system 400 may be included in one or more personal computers, server computers, tablet computers, home-entertainment computers, network computing devices, video game devices, mobile computing devices, mobile communication devices (e.g., smartphone), and/or other computing devices, and wearable computing devices such as smart wristwatches and head mounted augmented reality devices.

Computing system 400 includes a logic processor 402 volatile memory 404, and a non-volatile storage device 406. Computing system 400 may optionally include a display subsystem 408, input subsystem 410, communication subsystem 412, and/or other components not shown in FIG. 4.

Logic processor 402 includes one or more physical devices configured to execute instructions. For example, the logic processor may be configured to execute instructions that are part of one or more applications, programs, routines, libraries, objects, components, data structures, or other logical constructs. Such instructions may be implemented to perform a task, implement a data type, transform the state of one or more components, achieve a technical effect, or otherwise arrive at a desired result.

The logic processor may include one or more physical processors configured to execute software instructions. Additionally or alternatively, the logic processor may include one or more hardware logic circuits or firmware devices configured to execute hardware-implemented logic or firmware instructions. Processors of the logic processor 402 may be single-core or multi-core, and the instructions executed thereon may be configured for sequential, parallel, and/or distributed processing. Individual components of the logic processor optionally may be distributed among two or more separate devices, which may be remotely located and/or configured for coordinated processing. Aspects of the logic processor may be virtualized and executed by remotely accessible, networked computing devices configured in a cloud-computing configuration. In such a case, these virtualized aspects are run on different physical logic processors of various different machines, it will be understood.

Non-volatile storage device 406 includes one or more physical devices configured to hold instructions executable by the logic processors to implement the methods and processes described herein. When such methods and processes are implemented, the state of non-volatile storage device 406 may be transformed-e.g., to hold different data.

Non-volatile storage device 406 may include physical devices that are removable and/or built in. Non-volatile storage device 406 may include optical memory, semiconductor memory, and/or magnetic memory, or other mass storage device technology. Non-volatile storage device 406 may include nonvolatile, dynamic, static, read/write, read-only, sequential-access, location-addressable, file-addressable, and/or content-addressable devices. It will be appreciated that non-volatile storage device 406 is configured to hold instructions even when power is cut to the non-volatile storage device 406.

Volatile memory 404 may include physical devices that include random access memory. Volatile memory 404 is typically utilized by logic processor 402 to temporarily store information during processing of software instructions. It will be appreciated that volatile memory 404 typically does not continue to store instructions when power is cut to the volatile memory 404.

Aspects of logic processor 402, volatile memory 404, and non-volatile storage device 406 may be integrated together into one or more hardware-logic components. Such hardware-logic components may include field-programmable gate arrays (FPGAs), program- and application-specific integrated circuits (PASIC / ASICs), program- and application-specific standard products (PSSP / ASSPs), system-on-a-chip (SOC), and complex programmable logic devices (CPLDs), for example.

The terms "module," "program," and "engine" may be used to describe an aspect of computing system 400 typically implemented in software by a processor to perform a particular function using portions of volatile memory, which function involves transformative processing that specially configures the processor to perform the function. Thus, a module, program, or engine may be instantiated via logic processor 402 executing instructions held by non-volatile storage device 406, using portions of volatile memory 404. It will be understood that different modules, programs, and/or engines may be instantiated from the same application, service, code block, object, library, routine, API, function, etc. Likewise, the same module, program, and/or engine may be instantiated by different applications, services, code blocks, objects, routines, APIs, functions, etc. The terms "module," "program," and "engine" may encompass individual or groups of executable files, data files, libraries, drivers, scripts, database records, etc.

When included, display subsystem 408 may be used to present a visual representation of data held by non-volatile storage device 406. The visual representation may take the form of a graphical user interface (GUI). As the herein described methods and processes change the data held by the non-volatile storage device, and thus transform the state of the non-volatile storage device, the state of display subsystem 408 may likewise be transformed to visually represent changes in the underlying data. Display subsystem 408 may include one or more display devices utilizing virtually any type of technology. Such display devices may be combined with logic processor 402, volatile memory 404, and/or non-volatile storage device 406 in a shared enclosure, or such display devices may be peripheral display devices.

When included, input subsystem 410 may comprise or interface with one or more user-input devices such as a keyboard, mouse, touch screen, camera, or microphone.

When included, communication subsystem 412 may be configured to communicatively couple various computing devices described herein with each other, and with other devices. Communication subsystem 412 may include wired and/or wireless communication devices compatible with one or more different communication protocols. As non-limiting examples, the communication subsystem may be configured for communication via a wired or wireless local- or wide-area network, broadband cellular network, etc. In some examples, the communication subsystem may allow computing system 400 to send and/or receive messages to and/or from other devices via a network such as the Internet.

Further, the disclosure comprises configurations according to the following clauses. One example provides a computing system for predicting substrate temperatures during simulated laser operation. The computing system comprises processing circuitry configured to retrieve parameters of a laser and parameters of a substrate to be subjected to operation of the laser, input the parameters of the laser and the substrate to an ablation stage portion of a model to calculate a first segment of laser operation which outputs an updated geometry of the substrate after a predicted ablation of material from the substrate via at least one laser pulse and an updated temperature value of the substrate after being subjected to the at least one laser pulse, input the updated geometry and the updated temperature value to a thermodynamic stage portion of the model to calculate a second segment of laser operation which outputs an updated temperature value of the substrate after heat transfer through the substrate and from the substrate to ambient air, and iteratively switch between the ablation stage portion and the thermodynamic stage portion through a final segment of laser operation to output a final predicted temperature value of the substrate. In this example, additionally or alternatively, the at least one laser pulse is one single laser pulse. In this example, additionally or alternatively, the substrate has a top layer of paint and a bottom layer of metal alloy, and the ablated material includes the paint. In this example, additionally or alternatively, the laser operation is surface preparation of the substrate prior to painting. In this example, additionally or alternatively, the processing circuitry is further configured to input the parameters of the laser and the substrate to the thermodynamic stage portion of the model. In this example, additionally or alternatively, the processing circuitry is further configured to output a maximum temperature predicted to be experienced by the substrate. In this example, additionally or alternatively, the processing circuitry is further configured to output a predicted structural effect on the substrate based on a comparison between the maximum temperature and the parameters of the substrate. In this example, additionally or alternatively, the processing circuitry is further configured to output a predicted material removal rate of material from the substrate. In this example, additionally or alternatively, the parameters of the laser include one or more of target ablation depth, frequency, power setting, efficiency, power delivery to a top surface of the substrate, spot diameter, spot area, pulse duration, pulse energy, peak power, spot fluence, irradiance, pulse overlap, line speed, row spacing, spot spacing, and dosage. In this example, additionally or alternatively, the parameters of the substrate include one or more of initial geometry, a composition of a material of the substrate, thermodynamic properties of the material, mechanical properties of the material, and phase transformation properties of the material. In this example, additionally or alternatively, the parameters of the substrate include temperature-dependent properties of a material of the substrate.

Another example provides a method for predicting substrate temperatures during simulated laser operation. The method comprises retrieving parameters of a laser and parameters of a substrate to be subjected to operation of the laser, inputting the parameters of the laser and the substrate to an ablation stage portion of a model to calculate a first segment of laser operation which outputs an updated geometry of the substrate after a predicted ablation of material from the substrate via at least one laser pulse and an updated temperature value of the substrate after being subjected to the at least one laser pulse, inputting the updated geometry and the updated temperature value to a thermodynamic stage portion of the model to calculate a second segment of laser operation which outputs an updated temperature value of the substrate after heat transfer through the substrate and from the substrate to ambient air, and iteratively switching between the ablation stage portion and the thermodynamic stage portion through a final segment of laser operation to output a final predicted temperature value of the substrate. In this example, additionally or alternatively, the at least one laser pulse is one single laser pulse. In this example, additionally or alternatively, the substrate has a top layer of paint and a bottom layer of metal alloy, and the ablated material includes the paint. In this example, additionally or alternatively, the laser operation is surface preparation of the substrate prior to painting. In this example, additionally or alternatively, the method further includes inputting the parameters of the laser and the substrate to the thermodynamic stage portion of the model. In this example, additionally or alternatively, the method further includes outputting a maximum temperature predicted to be experienced by the substrate. In this example, additionally or alternatively, the method further includes outputting a predicted structural effect on the substrate based on a comparison between the maximum temperature and the parameters of the substrate. In this example, additionally or alternatively, the method further includes outputting a predicted material removal rate of material from the substrate.

Another example provides a computing system for predicting substrate temperatures during simulated laser operation. The computing system comprises processing circuitry configured to retrieve respective parameters of a laser and parameters of a plurality of substrates to be separately subjected to operation of the laser, input the respective parameters of the laser and the substrate to an ablation stage portion of a model to calculate a first segment of laser operation which outputs a respective updated geometry of each substrate after a predicted ablation of material from the substrate via at least one laser pulse and a respective updated temperature value of each substrate after being subjected to the at least one laser pulse, input the respective updated geometry and the respective updated temperature value to a thermodynamic stage portion of the model to calculate a second segment of laser operation which outputs a respective updated temperature value of each substrate after heat transfer through the substrate and from the substrate to ambient air, iteratively switch between the ablation stage portion and the thermodynamic stage portion through a final segment of laser operation to output a respective final predicted temperature value of each substrate, identify a respective maximum temperature predicted to be experienced by each substrate during the entire laser operation, compare the respective maximum temperature to the respective parameters of each substrate, and based on the comparison, output a prediction of whether each substrate of the plurality of substrates is to be damaged by the laser operation. In this example, additionally or alternatively, the updated geometries are each three dimensional.

Further examples are set forth in the following clauses.

Clause A1. A computing system (22) for predicting substrate temperatures during simulated laser operation, the computing system (22) comprising: processing circuitry (26) configured to: retrieve parameters (30A) of a laser and parameters (30B) of a substrate (12) to be subjected to operation of the laser; input the parameters (30A, 30B) of the laser and the substrate (12) to an ablation stage portion (32A) of a model (32) to calculate a first segment of laser operation which outputs: an updated geometry (36) of the substrate (12) after a predicted ablation of material from the substrate (12) via at least one laser pulse; and an updated temperature value (38) of the substrate (12) after being subjected to the at least one laser pulse; input the updated geometry (36) and the updated temperature value (38) to a thermodynamic stage portion (32B) of the model (32) to calculate a second segment of laser operation which outputs an updated temperature value (40) of the substrate (12) after heat transfer through the substrate (12) and from the substrate (12) to ambient air; and iteratively switch between the ablation stage portion (32A) and the thermodynamic stage portion (32B) through a final segment of laser operation to output a final predicted temperature value (44) of the substrate (12).

Clause A2. The computing system (22) of Clause A1, wherein the at least one laser pulse is one single laser pulse.

Clause A3. The computing system (22) of Clause A1 or A2, wherein the substrate (12) has a top layer (12A) of paint and a bottom layer (12B) of metal alloy, and the ablated material includes the paint.

Clause A4. The computing system (22) of any of Clauses A1 to A3, wherein the laser operation is surface preparation of the substrate (12) prior to painting.

Clause A5. The computing system (22) of any of Clauses A1 to A4, wherein the processing circuitry (26) is further configured to input the parameters (30A, 30B) of the laser and the substrate (12) to the thermodynamic stage portion (32B) of the model (32).

Clause A6. The computing system (22) of any of claims A1 to A5, wherein the processing circuitry (26) is further configured to output a maximum temperature (46) predicted to be experienced by the substrate (12).

Clause A7. The computing system (22) of any of Clauses A1 to A6, wherein the processing circuitry (26) is further configured to output a predicted structural effect (52) on the substrate (12) based on a comparison between the maximum temperature (46) and the parameters (30B) of the substrate (12).

Clause A8. The computing system (22) of any of Clauses A1 to A7, wherein the processing circuitry (26) is further configured to output a predicted material removal rate (48) of material from the substrate (12).

Clause A9. The computing system (22) of any of Clauses A1 to A8, wherein the parameters (30A) of the laser include one or more of target ablation depth, frequency, power setting, efficiency, power delivery to a top surface of the substrate (12), spot diameter, spot area, pulse duration, pulse energy, peak power, spot fluence, irradiance, pulse overlap, line speed, row spacing, spot spacing, and dosage.

Clause A10. The computing system (22) of any of Clauses A1 to A9, wherein the parameters (30B) of the substrate (12) include one or more of initial geometry, a composition of a material of the substrate (12), thermodynamic properties of the material, mechanical properties of the material, and phase transformation properties of the material.

Clause A11. The computing system (22) of any of Clauses A1 to A10, wherein the parameters (30B) of the substrate (12) include temperature-dependent properties of a material of the substrate (12).

Clause A12. A method (300) for predicting substrate temperatures during simulated laser operation, the method (300) comprising: retrieving (302) parameters of a laser and parameters of a substrate to be subjected to operation of the laser; inputting (304) the parameters of the laser and the substrate to an ablation stage portion of a model to calculate a first segment of laser operation which outputs: an updated geometry (306) of the substrate after a predicted ablation of material from the substrate via at least one laser pulse; and an updated temperature value (308) of the substrate after being subjected to the at least one laser pulse; inputting (312) the updated geometry and the updated temperature value to a thermodynamic stage portion of the model to calculate a second segment of laser operation which outputs an updated temperature value of the substrate after heat transfer through the substrate and from the substrate to ambient air; and iteratively switching (314) between the ablation stage portion and the thermodynamic stage portion through a final segment of laser operation to output a final predicted temperature value of the substrate.

Clause A13. The method (300) of Clause A12, wherein the at least one laser pulse is one single laser pulse.

Clause A14. The method (300) of Clause A12 or A13, wherein the substrate has a top layer of paint and a bottom layer of metal alloy, and the ablated material includes the paint.

Clause A15. The method (300) of any of Clauses A12 to A14, wherein the laser operation is surface preparation of the substrate prior to painting.

Clause A16. The method (300) of any of claims A12 to A15, further comprising inputting (310) the parameters of the laser and the substrate to the thermodynamic stage portion of the model.

Clause A17. The method (300) of any of Clauses A12 to A16, further comprising outputting (316) a maximum temperature predicted to be experienced by the substrate.

Clause A18. The method (300) of any of Clauses A12 to A17, further comprising outputting (318) a predicted structural effect on the substrate based on a comparison between the maximum temperature and the parameters of the substrate.

Clause A19. The method (300) of any of Clauses A12 to A18, further comprising outputting (320) a predicted material removal rate of material from the substrate.

Clause A20. A computing system (22) for predicting substrate temperatures during simulated laser operation, the computing system (22) comprising: processing circuitry (26) configured to: retrieve respective parameters (30A) of a laser and parameters (30B) of a plurality of substrates (12) to be separately subjected to operation of the laser; input the respective parameters (30A, 30B) of the laser and the substrate (12) to an ablation stage portion (32A) of a model (32) to calculate a first segment of laser operation which outputs: a respective updated geometry (36) of each substrate (12) after a predicted ablation of material from the substrate (12) via at least one laser pulse; and a respective updated temperature value (38) of each substrate (12) after being subjected to the at least one laser pulse; input the respective updated geometry (36) and the respective updated temperature value (38) to a thermodynamic stage portion (32B) of the model (32) to calculate a second segment of laser operation which outputs a respective updated temperature value (40) of each substrate (12) after heat transfer through the substrate (12) and from the substrate (12) to ambient air; iteratively switch between the ablation stage portion (32A) and the thermodynamic stage portion (32B) through a final segment of laser operation to output a respective final predicted temperature value (44) of each substrate (12); identify a respective maximum temperature (46) predicted to be experienced by each substrate (12) during the entire laser operation; compare the respective maximum temperature (46) to the respective parameters (30B) of each substrate (12); and based on the comparison, output a prediction of whether each substrate (12) of the plurality of substrates (12) is to be damaged by the laser operation.

Clause A21. The computing system (22) of Clause A20, wherein the updated geometries (36) are each three dimensional.

Clause B1. A method (300) for predicting substrate temperatures during simulated laser operation, the method (300) comprising: retrieving (302) parameters of a laser and parameters of a substrate to be subjected to operation of the laser; inputting (304) the parameters of the laser and the substrate to an ablation stage portion of a model to calculate a first segment of laser operation which outputs: an updated geometry (306) of the substrate after a predicted ablation of material from the substrate via at least one laser pulse; and an updated temperature value (308) of the substrate after being subjected to the at least one laser pulse; inputting (312) the updated geometry and the updated temperature value to a thermodynamic stage portion of the model to calculate a second segment of laser operation which outputs an updated temperature value of the substrate after heat transfer through the substrate and from the substrate to ambient air; and iteratively switching (314) between the ablation stage portion and the thermodynamic stage portion through a final segment of laser operation to output a final predicted temperature value of the substrate.

Clause B2. The method (300) of Clause B1, wherein the at least one laser pulse is one single laser pulse.

Clause B3. The method (300) of Clause B1 or B2, wherein the substrate has a top layer of paint and a bottom layer of metal alloy, and the ablated material includes the paint.

Clause B4. The method (300) of any of Clauses B1 to B3, wherein the laser operation is surface preparation of the substrate prior to painting.

Clause B5. The method (300) of any of Clauses B1 to B4, further comprising inputting (310) the parameters of the laser and the substrate to the thermodynamic stage portion of the model.

Clause B6. The method (300) of any of Clauses B1 to B5, further comprising outputting (316) a maximum temperature predicted to be experienced by the substrate.

Clause B7. The method (300) of any of Clauses B1 to B6, further comprising outputting (318) a predicted structural effect on the substrate based on a comparison between the maximum temperature and the parameters of the substrate.

Clause B8. The method (300) of any of Clauses B1 to B7, further comprising outputting (320) a predicted material removal rate of material from the substrate.

Clause B9. The method (300) of any of Clauses B1 to B8, wherein the parameters (30A) of the laser include one or more of target ablation depth, frequency, power setting, efficiency, power delivery to a top surface of the substrate (12), spot diameter, spot area, pulse duration, pulse energy, peak power, spot fluence, irradiance, pulse overlap, line speed, row spacing, spot spacing, and dosage.

Clause B10. The method (300) of any of Clauses B1 to B9, wherein the parameters (30B) of the substrate (12) include one or more of initial geometry, a composition of a material of the substrate (12), thermodynamic properties of the material, mechanical properties of the material, and phase transformation properties of the material.

Clause B11. The method (300) of any of Clauses B1 to B10, wherein the parameters (30B) of the substrate (12) include temperature-dependent properties of a material of the substrate (12).

Clause B12. The method (300) of any of Clauses B1 to B11, wherein the updated geometries (36) are each three dimensional.

Clause B13. The method (300) of any of Clauses B1 to B12, further comprising displaying the final predicted temperature value of the substrate.

Clause B14. The method (300) of any of Clauses B1 to B13, further comprising comparing the final predicted temperature value of the substrate to the respective parameters of the substrate (12) and, based on the comparison, display a prediction (54) of whether the substrate (12) would be damaged by the laser operation.

Clause B15. The method (300) of Clause B14, wherein the prediction comprises a prediction of whether the substrate (12) would be damaged by melting, warping, weakening, cracking or fatigue acceleration.

Clause B16. The method (300) of Clause B14 or B15, further comprising repeating the method (300) for a plurality of substrates (12) and performing testing on physical substrate coupons of substrates predicted not to be damaged by the laser operation.

Clause B17. The method (300) of any of Clauses B1 to B16, further comprising controlling an actual laser operation using the actual laser on the actual substrate based on the final predicted temperature of the substrate.

Clause B18. A computer program comprising computer program instructions that, when executed by one or more computer processors, cause the one or more computer processors to perform the method of any of Clauses B1 to B17.

Clause B19. A computer readable medium having stored thereon the computer program of Clause B18.

Clause B20. A computing system (22) for predicting substrate temperatures during simulated laser operation, the computing system (22) comprising one or more computer processors and computer memory having stored therein a computer program comprising computer program instructions that, when executed by the one or more computer processors, cause the one or more computer processors to perform the method of any of Clauses B1 to B17.

"And/or" as used herein is defined as the inclusive or V, as specified by the following truth table:

| A | B | A ∨ B |
|---|---|---|
| True | True | True |
| True | False | True |
| False | True | True |
| False | False | False |

It will be understood that the configurations and/or approaches described herein are exemplary in nature, and that these specific examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

## Claims

1. A method (300) for predicting substrate temperatures during simulated laser operation, the method (300) comprising:
retrieving (302) parameters of a laser and parameters of a substrate to be subjected to operation of the laser;
inputting (304) the parameters of the laser and the substrate to an ablation stage portion of a model to calculate a first segment of laser operation which outputs:
an updated geometry (306) of the substrate after a predicted ablation of material from the substrate via at least one laser pulse; and
an updated temperature value (308) of the substrate after being subjected to the at least one laser pulse;
inputting (312) the updated geometry and the updated temperature value to a thermodynamic stage portion of the model to calculate a second segment of laser operation which outputs an updated temperature value of the substrate after heat transfer through the substrate and from the substrate to ambient air; and
iteratively switching (314) between the ablation stage portion and the thermodynamic stage portion through a final segment of laser operation to output a final predicted temperature value of the substrate.

2. The method (300) of claim 1, wherein:
the substrate has a top layer of paint and a bottom layer of metal alloy, and the ablated material includes the paint, and/or
the laser operation is surface preparation of the substrate prior to painting.

3. The method (300) of claim 1 or 2, further comprising inputting (310) the parameters of the laser and the substrate to the thermodynamic stage portion of the model.

4. The method (300) of any of claims 1 to 3, further comprising outputting (316) a maximum temperature predicted to be experienced by the substrate.

5. The method (300) of any of claims 1 to 4, further comprising outputting (318) a predicted structural effect on the substrate based on a comparison between the maximum temperature and the parameters of the substrate.

6. The method (300) of any of claims 1 to 5, further comprising outputting (320) a predicted material removal rate of material from the substrate.

7. The method (300) of any of claims 1 to 6, wherein the parameters (30A) of the laser include one or more of target ablation depth, frequency, power setting, efficiency, power delivery to a top surface of the substrate (12), spot diameter, spot area, pulse duration, pulse energy, peak power, spot fluence, irradiance, pulse overlap, line speed, row spacing, spot spacing, and dosage.

8. The method (300) of any of claims 1 to 7, wherein the parameters (30B) of the substrate (12) include one or more of initial geometry, a composition of a material of the substrate (12), thermodynamic properties of the material, mechanical properties of the material, and phase transformation properties of the material.

9. The method (300) of any of claims 1 to 8, wherein the parameters (30B) of the substrate (12) include temperature-dependent properties of a material of the substrate (12).

10. The method (300) of any of claims 1 to 9, further comprising displaying the final predicted temperature value of the substrate.

11. The method (300) of any of claims 1 to 10, further comprising comparing the final predicted temperature value of the substrate to the respective parameters of the substrate (12) and, based on the comparison, display a prediction (54) of whether the substrate (12) would be damaged by the laser operation and, optionally, wherein the prediction comprises a prediction of whether the substrate (12) would be damaged by melting, warping, weakening, cracking or fatigue acceleration.

12. The method (300) of claim 11, further comprising repeating the method (300) for a plurality of substrates (12) and performing testing on physical substrate coupons of substrates predicted not to be damaged by the laser operation.

13. The method (300) of any of claims 1 to 12, further comprising controlling an actual laser operation using an actual laser on an actual substrate based on the final predicted temperature of the substrate.

14. A computer program comprising computer program instructions that, when executed by one or more computer processors, cause the one or more computer processors to perform the method of any of claims 1 to 13, or a computer readable medium having stored thereon such a computer program.

15. A computing system (22) for predicting substrate temperatures during simulated laser operation, the computing system (22) comprising one or more computer processors and computer memory having stored therein a computer program comprising computer program instructions that, when executed by the one or more computer processors, cause the one or more computer processors to perform the method of any of claims 1 to 13.
